(19) Europäisches Patentamt
European Patent Office
Office européen des brevets

(11) **EP 2 250 906 B1**

(12) **EUROPEAN PATENT SPECIFICATION**

(45) Date of publication and mention
of the grant of the patent:
**04.07.2018 Bulletin 2018/27**

(21) Application number: **09717846.1**

(22) Date of filing: **03.03.2009**

(51) Int Cl.:
**A23J 3/08** $^{(2006.01)}$

(86) International application number:
**PCT/JP2009/000946**

(87) International publication number:
**WO 2009/110218 (11.09.2009 Gazette 2009/37)**

(54) **METHOD OF DENATURING WHEY PROTEIN**

VERFAHREN ZUR DENATURIERUNG EINES MOLKEPROTEINS

PROCÉDÉ DE DÉNATURATION DE PROTÉINES DU LACTOSÉRUM

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **04.03.2008 JP 2008053626**

(43) Date of publication of application:
**17.11.2010 Bulletin 2010/46**

(73) Proprietor: **Morinaga Milk Industry Co., Ltd.
Minato-ku
Tokyo 108-8384 (JP)**

(72) Inventors:
• **ARASE, Hiroshi
Zama-shi
Kanagawa 228-8583 (JP)**
• **SUZUKI, Manabu
Zama-shi
Kanagawa 228-8583 (JP)**
• **ASANO, Yuzo
Zama-shi
Kanagawa 228-8583 (JP)**

(74) Representative: **Beckmann, Claus et al
Kraus & Weisert
Patentanwälte PartGmbB
Thomas-Wimmer-Ring 15
80539 München (DE)**

(56) References cited:
EP-A1- 0 250 623        EP-A1- 0 412 590
EP-A1- 1 775 542        WO-A1-2006/058538
WO-A2-01/97629        WO-A2-03/033097
JP-A- 7 184 556        JP-A- 7 213 232
JP-A- 2000 004 786        JP-A- 2007 125 454
JP-A- 2007 125 454        JP-B2- 3 798 249
JP-T- 2005 506 174        US-A- 4 187 143

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method of denaturing whey protein as set forth in the claims.

BACKGROUND ART

Whey protein is a protein present in milk and is well known as a by-product generated mainly by cheese or casein manufacture. Whey protein is a high quality mineral rich protein component and is therefore used not only in various foods but also in other products such as shampoos, hair conditioners, and cosmetics (e.g., creams).

Whey protein is widely used in such various products, but it is known that whey protein is poor in heat stability and is therefore rapidly denatured by heating at 70 to 90°C (Non-Patent Document 1). However, for example, food manufacture often involves heat sterilization, and the heat sterilization is usually performed in a temperature range higher than the denaturation temperature range of whey protein. Therefore, whey protein contained in products is denatured by heating in its denaturation temperature range and undergoes an increase in viscosity, gelation, or aggregation, which adversely affects the taste and appearance of the products. This creates the need to limit the whey protein content of products or to replace whey protein with another protein material.

Therefore, in order to reduce the adverse effect of whey protein denatured by heat sterilization on products, it is conventionally known that whey protein previously denatured by physical or chemical treatment is used. More specifically, it is known that previously-denatured whey protein is used to reduce the degree of thermal denaturation of whey protein caused by heat sterilization, thereby reducing the effect of denaturation of whey protein such as an increase in viscosity, gelation, or aggregation caused by heating.

For example, Patent Document 1 discloses a method of denaturing whey protein, which comprises performing treatment such as pH adjustment or pre-heating on an aqueous solution containing whey protein and reacting the whey protein with transglutaminase as an enzyme while the aqueous solution is heated. Patent Document 2 discloses a method of producing proteinaceous microparticles, which comprises removing insoluble matter from a metal element-containing whey protein solution and mixing the whey protein solution with an organic solvent.

Further, a method comprising subjecting whey protein to both heating for denaturation and shearing for microparticulation is also known. Here, microparticulation of whey protein is performed to prevent the occurrence of aggregation or precipitation of whey protein or to prevent whey protein from becoming too thick.

For example, Patent Document 3 discloses a solid yogurt containing substantially nonaggregative denatured protein spheres or aggregates thereof obtained by heating a whey protein concentrate to a temperature higher than the denaturation temperature of whey protein under high shear conditions.

However, neither of the Patent Documents 1 and 2 discloses a method of producing denatured whey protein by using only whey protein, because the method disclosed in Patent Document 1 uses an enzyme or a material containing a metal element and the method disclosed in Patent Document 2 uses an organic solvent. Further, these methods are not easy to use because it is necessary to satisfactorily remove an additive such as an enzyme or an organic solvent from products, which creates the need to provide equipment required for safe and reliable removal of such an additive and to tightly control the operation of the equipment.

In Patent Document 3, a method disclosed in Japanese Patent Application National Publication No. 6-509475 is proposed as a method of producing denatured protein spheres and "Simplesse 100" (manufactured by CP Kelco) is proposed as a product of denatured protein spheres. However, when a food product such as ice cream or soup is produced by mixing such denatured protein spheres with other raw materials and then sterilizing the mixture at high temperature, there is a problem that, in a taste test (sensory test) for evaluating the texture (e.g., graininess, dustiness, thickness) and appearance (e.g., gelation, aggregation) of food products, the food product is evaluated as bad depending on the kind of food due to its excessive thickness and graininess.

Patent Document 1: Japanese Patent Application Laid-Open No. 2000-4786
Patent Document 2: Japanese Patent Application Laid-Open No. 7-184556
Patent Document 3: Japanese Patent No. 3798249
Non-Patent Document 1: "Comprehensive Encyclopedia of Milk" edited by Yamauchi and Yokoyama, 3rd edition, Asakura Publishing Co., Ltd., p. 61, 1998

EP 1 775 542 A1 discloses a method for denaturing whey protein comprising the preparation of a whey protein solution from whey protein, and the allowing of the whey protein solution to be continuously brought into contact and mixed with a whey protein solution flowing in a form of thin turbulent flow between two concentric cylinders while the mixed whey protein solution flowing in the form of a thin turbulent flow between the two concentric cylinders is sheared.

## DISCLOSURE OF THE INVENTION

## PROBLEMS TO BE SOLVED BY THE INVENTION

As described above, whey protein is denatured by heating in its denaturation temperature range during heat sterilization required for food manufacture, and as a result a phenomenon such as an increase in viscosity, gelation, or aggregation occurs. Such a phenomenon adversely affects the taste and appearance of products. In addition, there is also a problem that when a product containing a large amount of whey protein passes through a plate-type sterilizer, denatured whey protein is likely to be adhered or accumulated in a plate and therefore it takes much time and effort to remove the denatured whey protein from the plate.

Therefore, in order to prevent undesirable denaturation of whey protein, whey protein needs to be previously treated (denatured) to be better denatured whey protein.

However, as described above, none of the conventional methods of denaturing whey protein to produce better denatured whey protein is a method by which satisfactory better denatured whey protein can be obtained.

It is therefore an object of the present invention to provide a method of denaturing whey protein without using an additive such as an enzyme or an organic solvent to obtain better denatured whey protein having improved heat stability, that is, better denatured whey protein which does not adversely affect the taste and appearance of products even when subjected to heat treatment after denaturing (i.e., a method of producing better denatured whey protein) as set forth in the claims.

## MEANS FOR SOLVING THE PROBLEMS

In order to achieve the above object, the present inventors have extensively studied, and as a result have found that better denatured whey protein (modified whey protein) can be obtained by allowing a whey protein solution flowing in the form of thin turbulent flow between two concentric cylinders to be brought into contact and mixed with the whey protein solution flowing radially from the direction of the center of circles of the two concentric cylinders and by heating and shearing the mixed whey protein solution at high speed while the mixed whey protein solution is allowed to flow in the form of thin turbulent flow between two concentric cylinders in a cylindrical static mixing vessel. The method of denaturing whey protein according to the present invention is based on the finding and makes it possible to achieve better denaturation and microparticulation of whey protein. Better denatured whey protein obtained by the method according to the present invention does not undergo an increase in viscosity, gelation, or aggregation even when subjected to high-temperature heating or sterilization required for, for example, food manufacture and therefore has no adverse effects on the taste and appearance of products. That is, better denatured whey protein obtained by the method according to the present invention has significantly improved heat stability.

In order to achieve the above object, the invention provides a method of denaturing whey protein to improve its heat stability, as set forth in the claims, namely:

[1]. A method of producing denatured whey protein, the method comprising the steps of: 1) preparing a whey protein solution from whey protein, wherein the whey protein solution is a solution having a whey protein content of 5 to 18% by mass; and 2A) allowing the whey protein solution to be continuously brought into contact and mixed with a whey protein solution flowing in a form of turbulent flow between two concentric cylinders while the mixed whey protein solution flowing in the form of turbulent flow between the two concentric cylinders is sheared at a shearing speed of 5,000 s-1 to 25,000 s-1 at a temperature in a range of 85 to 120°C for at least 0.1 second, in a range of 80 to 85°C for at least 60 minutes, or in a range of 76 to 80°C for at least 480 minutes.

[2]. The method according to [1], further comprising: using an apparatus including: a cylindrical static mixing vessel; a rotation axis provided in the static mixing vessel so as to be concentric with an axis of the static mixing vessel; and a rotary blade which has a diameter smaller than that of the static mixing vessel, which is attached to the rotation axis, and which includes a porous cylinder provided on its outer peripheral side and having a plurality of pores penetrating therethrough in a radial direction, wherein the contact and mixing of the whey protein solution with the whey protein solution flowing in the form of turbulent flow between two concentric cylinders is performed by allowing the whey protein solution introduced into an inside of the porous cylinder to be discharged through the pores of the porous cylinder and brought into contact and mixed with the whey protein solution flowing in the form of turbulent flow in a cylindrical space between the static mixing vessel and the porous cylinder by rotating the rotary blade.

[3]. The method according to any of [1] or [2], further comprising: using an apparatus including: a cylindrical static mixing vessel; a rotation axis provided in the static mixing vessel so as to be concentric with an axis of the static mixing vessel; and a rotary blade which has a diameter smaller than that of the static mixing vessel, which is attached to the rotation axis, and which includes a porous cylinder provided on its outer peripheral side and having a plurality of pores penetrating therethrough in a radial direction, wherein the shearing of the whey protein solution is performed by allowing the whey protein solution to flow in the form of turbulent flow in a cylindrical space between the static mixing vessel and the porous cylinder by rotating the rotary blade.

EFFECTS OF THE INVENTION

The better denatured whey protein obtained by a method according to the present invention does not cause the aggregation, gelation, or precipitation of whey protein particles even when mixed with foods and beverages and then heat-sterilized (heated), which makes it possible to provide products with good texture and taste. That is, the better denatured whey protein obtained by a method according to the present invention is suitable for use as a food material in various foods and beverages such as gellies, puddings, ice creams, drinkable yogurts, juice beverages, milk beverages, processed milk, coffee beverages, sports drinks, soups, baked foods, powdered milk, modified powdered milk for infants, and fluid foods. Further, the better denatured whey protein obtained by a method according to the present invention can also be used as a fat substitute in low-fat foods, and is also suitable for use in shampoos, hair conditioners, and cosmetics such as creams. The better denatured whey obtained by a method according to the present invention is particularly suitable for use in beverages such as drinkable yogurts, because it does not undergo precipitation due to its good dispersibility and is free from graininess and therefore smoothly passes through the throat.

Further, the better denatured whey obtained by a method according to the present invention is very safe for use in foods and beverages because it can be obtained without using an additive such as an enzyme or an organic solvent. Therefore, the better denatured whey obtained by a method according to the present invention can be used to produce products containing whey protein without any contrivance to remove an additive such as an enzyme or an organic solvent from the products.

BRIEF DESCRIPTION OF THE DRAWINGS

Fig. 1 is a schematic sectional view of one example of a shear apparatus used in the present invention;
Fig. 2 is a scanning probe microscope image of a particle surface of better denatured whey protein according to the present invention; and
Fig. 3 is a scanning probe microscope image of a particle surface of whey protein prepared as a control sample.

DESCRIPTION OF REFERENCE NUMERALS

1     shear apparatus
2     static mixing vessel
3     rotary blade
3a    rotation axis of rotary blade
3b    porous cylinder of rotary blade
3c    arm of rotary blade
4     supply tube
5     supply tube

BEST MODE FOR CARRYING OUT THE INVENTION

Hereinbelow, a preferred embodiment of the present invention will be described in detail. However, the present invention is not limited to the following embodiment, and various changes may be made within the scope of the present invention. It is to be noted that in this specification, percentages (%) are by mass unless otherwise specified.

<Whey Protein>

Whey protein to be used as a raw material in the present invention is not particularly limited as long as it is whey which is a protein derived from cow's milk. For example, whey obtained by purifying a raw material containing whey such as cow milk, skimmed milk, dry whole milk, or powdered skim milk by a conventional method can be used.

As a method of purifying a whey-containing raw material, a method in which casein and milk fat are removed from cow milk or skimmed milk by adding Rennet or the like can be mentioned. This method may further include the step of gel filtration, ultrafiltration, or ion exchange to obtain WPC (Whey Protein Concentrate) or WPI (Whey Protein Isolate). The thus obtained WPC or WPI can be used. Further, various whey protein products such as commercially-available WPC and WPI can also be used. Common milk products containing whey protein such as raw milk, skimmed milk, and powdered skim milk may be directly used.

It is to be noted that a solvent for use in dissolving a powdered product is not particularly limited, and an appropriate solvent such as water, raw milk, or skimmed milk is used.

As whey protein (raw material) to be denatured by a method according to the present invention, WPC80 (manufactured by Milei GmbH in Germany under the trade name of "Milei 80") which is a whey protein concentrate with a high protein content is preferably used in view of the fact that it is low in price based on protein content and easily available and that efficient treatment of whey protein can be achieved. It is to be noted that a numerical value shown in "WPC80" or "WPC50" used in the present invention indicates a whey protein content of the product. That is, the whey protein content of WPC80 is about 80%, and the whey protein content of WPC50 is about 50%.

<Better Denaturation>

In this specification, the term "better denatured" used for whey protein means the state of whey protein evaluated as "good" in terms of "heat stability" which will be defined later. That is, "better denatured whey protein" (modified whey protein) means whey protein whose "heat stability" is "good". More specifically, the phrase "heat stability is good" means that the taste and/or appearance of better denatured whey protein are/is maintained and/or improved even after heat treatment as compared to non-denatured whey protein (i.e. whey protein which is unmodified by the method of the present invention).

<Method of Denaturing Whey Protein>

The method of denaturing whey protein according to the present invention includes the steps of claim 1.

In the method of denaturing whey protein according to the present invention, the concentration of the whey protein solution expressed in terms of protein content is in the range of 5 to 18% by mass, but is preferably in the range of 10 to 18% by mass, more preferably in the range of 10 to 16% by mass from the viewpoint of shearing efficiency. By shearing the whey protein solution whose concentration is within the above range, it is possible to efficiently denature whey protein without causing gelation or aggregation.

In the method of denaturing whey protein according to the present invention, the pH of the whey protein solution is in the neutral range, but may be in the slightly acidic range. According to a preferred embodiment of the present invention, the pH of the whey protein solution is in the range of 5.5 to 7.5, preferably in the range of 6.0 to 7.0, more preferably in the range of 6.0 to 6.5.

The whey protein solution having a concentration within the above range is placed in a predetermined shear apparatus and then sheared. At this time, a mixing vessel of the shear apparatus may be at room temperature or may be maintained at any temperature of 60°C or lower by preliminary heating with hot water circulating in a water jacket of the mixing vessel.

After the whey protein solution is placed in the shear apparatus, the shearing of the whey protein solution is started, and the step of elevating the temperature of the mixing vessel of the shear apparatus (preliminary heating step) is performed while the shearing speed of the whey protein solution is maintained at a value in the range of 5, 000 $s^{-1}$ to 25,000 $s^{-1}$, preferably in the range of 10,000 $s^{-1}$ to 25,000 $s^{-1}$. According to a preferred embodiment of the present invention, the elevation of temperature of the mixing vessel of the shear apparatus is achieved in a very short period of time, and therefore a total time of preliminary heating and heat treatment can be regarded as heat treatment holding time.

After the temperature of the whey protein solution is elevated to a predetermined temperature in the preliminary heating step, the whey protein solution is subjected to heat treatment (final heating step) by maintaining the whey protein solution at the predetermined temperature for a predetermined period of time while the shear treatment of the whey protein solution is continued. At this time, the shearing speed of the whey protein solution is in the range of 5,000 to 25,000 $s^{-1}$, more preferably in the range of 7,500 to 25,000 $s^{-1}$, particularly preferably in the range of 10,000 to 25,000 $s^{-1}$ so that gelation or aggregation of whey protein does not occur in a heating test performed after the shear treatment. The heat treatment holding time is appropriately set depending on the temperature at which the whey protein solution is maintained, in a range of 85°c to 120°C for at least 1 second, in a range of 80 to 85°C for at least 60 minutes, or in a range of 76°C to 80°C for at least 480 minutes.

As described above, in the method of denaturing whey protein of the present invention, the shear treatment and the heat treatment are performed at the same time. This makes it possible to allow whey protein particles to have an average particle size, as measured under conditions specified in the present invention (which will be described later), in the range of 0.3 to 13.8 $\mu$m, preferably in the range of 0.5 to 13. 4 $\mu$m, more preferably in the range of 0.5 to 10 $\mu$m,

even more preferably in the range of 0.6 to 6 $\mu$m, even more preferably in the range of 0.6 to 3.42 $\mu$m, and even more preferably in the range of 0.6 to 1.87 $\mu$m. Further, the texture of better denatured whey protein obtained by the method according to the present invention is smooth and less thick than conventional whey protein.

<Shearing Step>

A shearing step is performed by a shear apparatus, and is the most distinctive step in the method of denaturing whey protein according to the present invention.

According to a preferred embodiment of the present invention, the shearing step is performed in the following manner. The whey protein solution prepared according to the present invention is supplied from an area near the center of a circular bottom of a static mixing vessel, is radially dispersed from the area near the center of the circular bottom of the static mixing vessel toward the whey protein solution already flowing in the form of thin turbulent flow in a cylindrical space due to high-speed rotation of the rotary blade, reaches the inner surface of the porous cylinder of the rotary blade, receives a centrifugal force generated by high-speed rotation of the rotary blade, is discharged through a plurality of pores penetrating the porous cylinder into the cylindrical space between the outer surface of the porous cylinder of the rotary blade and the inner surface of the static mixing vessel, and flows in the form of thin turbulent flow in the cylindrical space between the outer surface of the porous cylinder of the rotary blade and the inner surface of the static mixing vessel due to high-speed rotation of the rotary blade. In this way, the whey protein solution continuously supplied is discharged into, brought into contact with, mixed with, and then dispersed in the whey protein solution already flowing in the form of thin turbulent flow in the cylindrical space between the outer surface of the porous cylinder of the rotary blade and the inner surface of the static mixing vessel. The whey protein solution which has reached the inner peripheral surface of the porous cylinder of the rotary blade forms a thin layer on the inner peripheral surface due to a centrifugal force and is discharged through the pores penetrating the porous cylinder so that the supply of the whey protein solution to the outer peripheral surface of the porous cylinder of the rotary blade is continued while the rotary blade continues to rotate at high speed. The whey protein solution which keeps flowing in the form of thin turbulent flow in the cylindrical space between the outer surface (outer peripheral surface) of the porous cylinder of the rotary blade and the inner surface (inner peripheral surface) of the static mixing vessel due to a centrifugal force generated by high-speed rotation of the rotary blade undergoes shearing action due to the difference in rotation speed between the inner surface of the static mixing vessel and the outer surface of the porous cylinder of the rotary blade.

According to another preferred embodiment of the present invention, the shearing step is performed in the following manner. The whey protein solution prepared according to the present invention receives a centrifugal force generated by high-speed rotation of the rotary blade, is discharged into the cylindrical space between the outer surface of the porous cylinder of the rotary blade and the inner surface of the static mixing vessel through the pores penetrating the porous cylinder, and is brought into contact with, mixed with, and dispersed in the whey protein solution already flowing in the form of thin turbulent flow in the cylindrical space due to high-speed rotation of the rotary blade. The whey protein solution which keeps flowing in the form of thin turbulent flow in the cylindrical space between the outer surface (outer peripheral surface) of the porous cylinder of the rotary blade and the inner surface (inner peripheral surface) of the static mixing vessel due to a centrifugal force generated by high-speed rotation of the rotary blade undergoes shearing action due to the difference in rotation speed between the inner surface of the static mixing vessel and the outer surface of the porous cylinder of the rotary blade. The whey protein solution supplied from the direction of the center of circle of the porous cylinder and continuously discharged through the pores penetrating the porous cylinder receives a strong centrifugal force, and is therefore sprayed into and mixed with the whey protein solution flowing in the form of thin turbulent flow in the cylindrical space between the outer peripheral surface of the porous cylinder of the rotary blade and the inner peripheral surface of the static mixing vessel. At this time, the flows of the whey protein solution flowing in different directions are brought into contact and mixed with each other, which produces mixing action. This effectively promotes the shearing action.

The shearing step of the method according to the present invention may be performed by either of the above shearing methods.

As described above, the whey protein solution supplied from the direction of the center of circle of the porous cylinder and continuously discharged through the pores penetrating the porous cylinder receives a strong centrifugal force, and is therefore sprayed into and mixed with the whey protein solution flowing in the form of thin turbulent flow in the cylindrical space between the outer peripheral surface of the porous cylinder of the rotary blade and the inner peripheral surface of the static mixing vessel. At this time, the flows of the whey protein solution flowing in different directions are brought into contact and mixed with each other so that turbulent flow occurs, which produces mixing action. This effectively promotes the shearing action.

When the whey protein solution forming a thin layer on the inner peripheral surface of the porous cylinder is discharged onto the outer peripheral surface of the porous cylinder through the pores penetrating the porous cylinder, the same amount of the whey protein solution flowing in the form of thin turbulent flow in the cylindrical space between the outer surface (outer peripheral surface) of the porous cylinder and the inner surface (inner peripheral surface) of the static mixing vessel is again introduced into the inside of the porous cylinder through the upper and lower ends of the porous cylinder. Therefore, the whey protein solution discharged through the pores penetrating the porous cylinder and the whey protein solution flowing in the form of thin turbulent flow in the cylindrical space between the outer surface (outer peripheral surface) of the porous cylinder and the inner surface (inner peripheral surface) of the static mixing vessel are continuously brought into contact and mixed with each other while the rotary blade continues to rotate at high speed. The flow of the whey protein solution supplied through supply tubes joins the flow of the whey protein solution again introduced into the inside of the porous cylinder. Therefore, the occurrence of turbulent flow which produces mixing action and the promotion of the shearing action by the mixing action continue while the rotary blade continues to rotate at high speed.

After the shearing of the whey protein solution starts, the temperature of the whey protein solution is elevated to a target value and then maintained at a constant value. The temperature at which the whey protein solution is maintained can be adjusted by hot water or chilled water circulating in a water jacket of the mixing vessel. After a lapse of a predetermined holding time, the whey protein solution is rapidly cooled by chilled water circulating in the shear apparatus, discharged through a discharge port, and collected.

It is to be noted that in the present invention, the shearing speed is a ratio of the velocity (V) of a mixing blade in the tangential direction to the clearance (C) between the tip of the mixing blade and a cylinder wall in the shear apparatus that provides shearing action, and is a physical amount having the dimension of 1/sec. Therefore, a smaller clearance and a larger velocity of the mixing blade in the tangential direction increase the shearing speed. The shearing speed can be determined by the following equation.

$$\texttt{Shearing speed } (\texttt{s}^{-1}) \texttt{ = V/C}$$

The shearing temperature can be adjusted to any value as long as it is 130°C or less. However, in the present invention, the shearing temperature is in the range of 76 to 120°C, preferably in the range of 80 to 120°C, particularly preferably in the range of 85 to 120°C to maintain the quality of whey protein. Further, from the viewpoint of workability under atmospheric pressure, the shearing temperature is in the range of 76 to 100°C, preferably in the range of 80 to 100°C, particularly preferably in the range of 85 to 100°C. By selecting a higher shearing temperature, the present invention can be appropriately carried out even when the holding time is shorter. In a case where the shearing temperature is set to a value within a range including 76°C as the lowest temperature, the holding time is preferably 8 minutes (480 seconds) or longer. In a case where the shearing temperature is set to a value within a range including 80°C as the lowest temperature, the holding time is preferably 1 minute (60 seconds) or longer. In a case where the shearing temperature is set to a value within a range including 85°C as the lowest temperature, the holding time is preferably 0.1 second or longer. According to a preferred embodiment of the present invention, when the shearing temperature is in the range of 80 to 120°C, the holding time can be set to a value in the range of 480 to 60 seconds. According to another preferred embodiment of the present invention, when the shearing temperature is in the range of 85 to 120°C, the holding time can be set to a value in the range of 480 to 0.1 seconds. According to still another preferred embodiment of the present invention, when the shearing temperature is in the range of 80 to 100°C, the holding time can be set to a value in the range of 480 to 60 seconds. According to yet another preferred embodiment of the present invention, when the shearing temperature is in the range of 85 to 100°C, the holding time can be set to a value in the range of 480 to 0.1 seconds. According to a preferred embodiment of the present invention, a combination of the shearing temperature of 76°C or higher but lower than 80°C and the holding time of 8 minutes or longer but 30 minutes or shorter, a combination of the shearing temperature of 80°C or higher but lower than 85°C and the holding time of 60 seconds or longer but shorter than 8 minutes, and a combination of the shearing temperature of 85°C or higher but 120°C or lower and the holding time of 480 to 0.1 seconds can be used.

<Shear Apparatus>

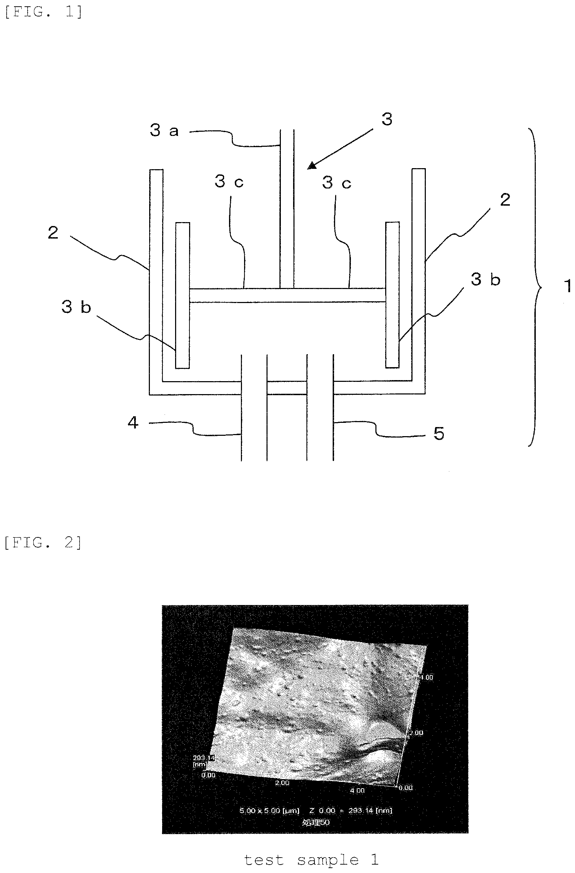

A shear apparatus used in the present invention includes a cylindrical static mixing vessel, a rotary blade, and a rotation axis. The rotation axis is provided in the static mixing vessel so as to be concentric with the axis of the static mixing vessel. The rotary blade includes a porous cylinder provided on its outer peripheral side and has a diameter slightly smaller than that of the static mixing vessel. The porous cylinder is a cylindrical body having a plurality of pores penetrating therethrough in a radial direction. The rotary blade is attached to the rotation axis. The shear apparatus shears a whey protein solution by allowing the whey protein solution to flow in the form of thin turbulent flow along the inner surface of the static mixing vessel due to high-speed rotation of the rotary blade. According to a preferred embodiment of the present invention, the inner peripheral surface of the static mixing vessel has surface irregularities . Fig. 1 is a schematic sectional view of one example of the shear apparatus used in the present invention. A shear apparatus 1 includes a cylindrical static mixing vessel 2, a rotary blade 3, and supply tubes 4 and 5. The rotary blade 3 and the supply tubes 4 and 5 are provided inside the static mixing vessel 2. The rotary blade 3 includes a rotation axis 3a, an arm 3c, and a porous cylinder 3b. The arm 3c allows the porous cylinder 3b to be rotatably integrated with the rotation axis 3a. The porous cylinder 3b has a plurality of pores (not shown) penetrating therethrough in a radial direction, and the arm 3c has two or more interconnecting pores (not shown) penetrating therethrough in the axial direction of the rotation axis. The supply tubes 4 and 5 are arranged near the center of the circular bottom of the static mixing vessel 2 to supply a previously-prepared whey protein solution to the shear apparatus 1. The whey protein solution supplied to the shear apparatus 1 is radially dispersed from an area near the outlet ports of the supply tubes 4 and 5 toward the whey protein solution already flowing in the form of thin turbulent flow in a cylindrical space due to high-speed rotation of the rotary blade 3, reaches the inner surface of the porous cylinder 3b, receives a centrifugal force generated by high-speed rotation of the rotary blade 3, is discharged through the pores penetrating the porous cylinder 3b into the cylindrical space between the outer surface of the porous cylinder 3b and the inner surface of the static mixing vessel 2, and then flows in the form of thin turbulent flow in the cylindrical space due to high-speed rotation of the rotary blade 3. In this way, the whey protein solution continuously supplied is discharged into, brought into contact with, mixed with, and then dispersed in the whey protein solution already flowing in the form of thin turbulent flow in the cylindrical space. The whey protein solution which keeps flowing in the form of thin turbulent flow in the cylindrical space between the outer surface (outer peripheral surface) of the porous cylinder 3b and the inner surface (inner peripheral surface) of the static mixing vessel 2 due to a centrifugal force generated by high-speed rotation of the rotary blade 3 undergoes shearing action due to the difference in rotation speed between the inner surface of the static mixing vessel 2 and the outer surface of the porous cylinder 3b. The whey protein solution supplied from the direction of the center of circle of the porous cylinder 3b and continuously discharged through the pores penetrating the porous cylinder 3b receives a strong centrifugal force, and is therefore radially sprayed into and mixed with the whey protein solution flowing in the form of thin turbulent flow in the cylindrical space between the outer peripheral surface of the porous cylinder 3b and the inner peripheral surface of the static mixing vessel 2. At this time, the flows of the whey protein solution flowing in different directions are brought into contact and mixed with each other so that turbulent flow occurs, which produces mixing action. This effectively promotes the shearing action. When the whey protein solution forming a thin layer on the inner peripheral surface of the porous cylinder 3b is discharged onto the outer peripheral surface of the porous cylinder 3b through the pores penetrating the porous cylinder 3b, the same amount of the whey protein solution is introduced from the cylindrical space between the outer surface (outer peripheral surface) of the porous cylinder 3b and the inner surface (inner peripheral surface) of the static mixing vessel 2 and/or from the supply tubes 4 and 5. Therefore, the whey protein solution discharged through the pores penetrating the porous cylinder 3b and the whey protein solution flowing in the form of thin turbulent flow in the cylindrical space between the outer surface of the porous cylinder 3b and the inner surface of the static mixing vessel 2 are continuously brought into contact and mixed with each other while the rotary blade 3 continues to rotate at high speed. Therefore, the occurrence of turbulent flow which produces mixing action and the promotion of the shearing action by the mixing action continue while the rotary blade 3 continues to rotate at high speed. According to a preferred embodiment of the present invention, the static mixing vessel 2 includes a temperature control device (not shown) such as a water jacket capable of circulating water having a desired temperature. According to a preferred embodiment of the present invention, the shear apparatus 1 includes a discharge tube (not shown) for discharging a better denatured whey protein solution. According to a preferred embodiment of the present invention, the shear apparatus 1 includes a sheathing board (not shown) inside the static mixing vessel 2. This sheathing board (not shown) is provided along the inner surface of the static mixing vessel 2 and is located at a position higher than the upper end of the porous cylinder 3b, and is an annular ring-shaped sheathing board extending from the inner surface of the static mixing vessel 2 to an area near the rotation axis 3a in a direction toward the center of circle of the cylindrical static mixing vessel 2. The sheathing board prevents the whey protein solution flowing in the form of thin turbulent flow in the cylindrical space from reaching an undesired high level at the inner surface of the static mixing vessel 2 or guides the whey protein solution flowing over the sheathing board into the discharge tube (not shown) so that the better denatured whey protein solution having been subjected to shearing can be continuously discharged through the discharge tube.

According to a preferred embodiment of the present invention, the static mixing vessel is equipped with a water jacket on its outside so that the temperature of a liquid to be treated can be adjusted by cooling or heating it by supplying cooling water or hot water to the water jacket.

According to a preferred embodiment of the present invention, a series of flow channels for delivering a sample liquid including the liquid outlet and inlet ports of the static mixing vessel can create a closed system and is provided with a pressure pump and a pressure valve. The pressure inside the closed system can be set to any value by operating the pressure pump and the pressure valve. The pressure pump is used as a pressurizing pump to heat a sample liquid to 100°C or higher or to prevent boiling of a sample liquid when the sample liquid is heated to a temperature around 100°C. By operating the pressure pump, the temperature of a liquid to be treated can be increased to 130°C.

When a liquid to be treated is sheared by the shear apparatus, heat is generated by the friction between the rotary blade and the liquid to be treated. Therefore, when a shearing force larger than 10,000 $s^{-1}$ is applied, a whey protein solution can be heated by using heat generated by friction. Heat generated by energy created during the shearing step is referred to as "shear heat".

As an apparatus to be used in the mixing step of the method according to the present invention, "FILMICS (registered trademark) FM-80-50" (manufactured by Primix Corporation) can be mentioned by way of example. More specifically, a high-speed mixing device disclosed in Japanese Patent Application Laid-Open No. 2007-125454, particularly a device shown in Figs. 1 and 2 in JP-A No. 2007-125454 can be mentioned by way of example. However, the shear apparatus is not limited thereto, and any apparatus can be used as long as a similar shearing effect can be obtained.

<Heat Stability of Whey Protein>

Better denatured whey protein obtained by the method according to the present invention has properties such that aggregation, gelation, or precipitation of whey protein is not caused by reheating at a temperature higher than the denaturation temperature of whey protein, that is, better denatured whey protein obtained by the method according to the present invention has good heat stability. Therefore, the better denatured whey protein is suitable for use as a raw material of foods and beverages whose production process involves heat sterilization.

Here, the phrase "aggregation, gelation, or precipitation of whey protein is not caused by reheating" means that aggregation of particles of whey protein is not caused by a heating test (heating at 85°C for 10 minutes) simulating heat sterilization in food production and an average particle size of the particles is kept within the range of 0.3 to 13.8 $\mu$m even after the heating test and that the texture (e.g., graininess, dustiness, thickness) and appearance (e.g., gelation, aggregation) of the whey protein are evaluated as good in a sensory evaluation test performed after the heating test (i.e., the texture and appearance of the whey protein are kept good) .

It is to be noted that the heat stability of whey protein defined in the present invention can be evaluated in the following manner. A whey protein-containing sample is dissolved to prepare a sample solution containing the whey protein-containing sample as solid matter in an amount of 12. 5% by mass, the sample solution is subjected to heat treatment at 85°C for 10 minutes, and then the heat-treated sample solution is subjected to a sensory evaluation test and a measurement of an average particle size.

<Sensory evaluation test>

In the present invention, the sensory evaluation test is performed by 5 to 10 panelists in the following manner. As described above, a whey protein-containing sample is dissolved to prepare a sample solution containing the whey protein-containing sample as solid matter in an amount of 12. 5% by mass, the sample solution is subjected to heat treatment at 85°C for 10 minutes, and the heat-treated sample solution is subjected to a taste test and an appearance test. More specifically, the texture (e.g., graininess, dustiness, thickness) and appearance (e.g., gelation, aggregation) of the sample solution are each evaluated by assigning a score ranging from 0 (lowest score) to 3 (highest score) with increments of 1 and an average score of the panelists is calculated. When the calculated average score A is higher than 2 but 3 or lower (i.e., $2<A\leq3$), the result of the sensory evaluation test is defined as "good", when the calculated average score A is higher than 1 but 2 or lower (i.e., $1<A\leq2$), the result of the sensory evaluation test is defined as "slightly good", and when the calculated average score A is 0 or higher but 1 or lower (i.e., $0\leq A\leq1$), the result of the sensory evaluation test is defined as "bad". When the result of the sensory evaluation test is "good", the heat stability of the whey protein-containing sample can be evaluated as "good", when the result of the sensory evaluation test is "slightly good", the heat stability of the whey protein-containing sample can be evaluated as "slightly good", and when the result of the sensory evaluation test is "bad", the heat stability of the whey protein-containing sample can be evaluated as "bad".

<Average Particle Size>

In the present invention, the average particle size of whey protein particles can be measured in the following manner. First, as described above, a whey protein-containing sample is dissolved to prepare a sample solution containing the whey protein-containing sample as solid matter in an amount of 12. 5% by mass, and then the sample solution is subjected to heat treatment at 85°C for 10 minutes. Then, the heat-treated sample solution is analyzed by, for example, a laser diffraction particle size distribution analyzer to determine the average particle size of whey protein particles.

The relationship between the heat stability of whey protein evaluated by the sensory evaluation test and the physical properties of the whey protein will be described below as a reference example.

<Reference Example>

A sample containing whey protein was dissolved to prepare a sample solution containing the sample as solid matter in an amount of 12.5% by mass, the sample solution was subjected to heat treatment at 85°C for 10 minutes, and then the heat-treated sample solution was subjected to the sensory evaluation test. Further, the average particle size of whey protein particles contained in the heat-treated sample solution was measured as a physical property of the heat-treated whey protein to determine the relationship between the result of the sensory evaluation test and the average particle size of the whey protein particles.

It is to be noted that in the present invention, the average particle size (i.e., particle size at 50% cumulative distribution) of whey protein particles contained in a heat-treated sample solution was measured using a laser diffraction particle size distribution analyzer (manufactured by Horiba, Ltd. under the trade name of "LA-500") under conditions where a circulation flow rate was set to level 2 and a mixing speed was set to level 2.

As a result, as can be seen from Table 1, when the average particle size of the heat-treated whey protein is less than 13. 9 $\mu$m, the result of the sensory evaluation test is "good", and particularly, when the average particle size of the heat-treated whey protein is 0.3 to 13.8 $\mu$m, the whey protein has good texture and appearance.

This result means that when the average particle size of the heat-treated whey protein is less than 13.9 $\mu$m, particularly in the range of 0.3 to 13.8 $\mu$m, the heat stability of the whey protein can be evaluated as "good". Therefore, when the average particle size of whey protein produced by the method according to the present invention is in the range of 0.3 to 13.8 $\mu$m, it can be judged that the whey protein is better denatured whey protein. Further, such better denatured whey protein can be defined as whey protein having a very fine particle size having good effect on its taste and appearance.

[Table 1]

| Average particle size of whey protein ($\mu$m) | Sensory evaluation |
|---|---|
| 0.6 | Good |
| 1.1 | Good |
| 13.4 | Good |
| 13.9 | Slightly good |
| 65.0 | Bad |
| 112.7 | Bad |

Hereinafter, the above-described sensory evaluation test and test for the measurement of the average particle size performed to evaluate the heat stability of whey protein in the present invention will be sometimes simply referred to as "heating test".

<Foods etc. containing better denatured whey protein>

The better denatured whey protein obtained by the method according to the present invention can be used as a raw material of foods whose feeling on the tongue or feeling in the throat when swallowing is regarded as important. More specifically, the better denatured whey protein obtained by the method according to the present invention is suitable for use as a raw material of food groups such as jellies, puddings, ice creams, drinkable yogurts, juice beverages, milk beverages, processed milk, coffee beverages, sports drinks, soups, baked foods, powdered milk, modified powdered milk for infants, and liquid diets.

It is to be noted that the better denatured whey protein obtained by the method according to the present invention is suitable for use not only in the above-mentioned food groups but also in shampoos, hair conditioners, and cosmetics such as creams and emulsions.

The particles of the better denatured whey protein of the present invention have micro projections on their surface. The micro projections can be observed using a scanning probe microscope. The number of the micro projections present on the particle surface in a range of 5 $\mu$m $\times$ 5 $\mu$m is 100 to 100,000. Further, the diameter of the micro projections is preferably in the range of 10 to 200 nm. Further, the height (largest point) of the micro projections is preferably in the range of 10 to 500 nm. It can be supposed that the presence of such micro projections contributes to the properties of the better denatured whey protein according to the present invention such that aggregation, gelation, or precipitation is not caused by reheating at a temperature higher than the denaturation temperature of whey protein simulating heat sterilization in food production and its texture is kept good (i.e., free from graininess, dustiness, and unpleasant thickness) even after the reheating.

EXAMPLES

Hereinbelow, the present invention will be described in more detail with reference to the following examples, but is not limited thereto.

<Example 1>

(Production Method)

WPC 35 (manufactured by Milei GmbH in Germany under the trade name of "Milei 35") and WPC 60 (manufactured by Milei GmbH in Germany under the trade name of "Milei 60") were mixed in a ratio of 1:1 to prepare whey protein (hereinafter, also referred to as "equivalent of WPC 50"), and the whey protein was dissolved in water at room temperature to prepare a whey protein solution with a solid content of 12.5% by mass (whey protein content: 10% by mass). Then, the whey protein solution was placed in a shear apparatus "Filmics FM-80-50". The shearing speed of the shear apparatus was set to 25,000 s$^{-1}$ and shearing was started. Preliminary heating was performed until the temperature of the whey protein solution reached 85°C (temperature rising step). After the temperature of the whey protein solution reached 85°C, the apparatus was operated at 85°C for 1 minute and then shearing was completed. After the completion of shearing, a mixing vessel was cooled by circulating chilled water in a water jacket provided outside the mixing vessel, and then the whey protein solution was discharged from the shear apparatus and collected. It is to be noted that in the shearing step, the holding time at 85°C was 0.1 second (heating holding step).

Then, the whey protein subjected to such shear treatment was heat-treated at 85°C for 10 minutes, and the heating test including a measurement of an average particle size and a sensory evaluation was performed on the heat-treated whey protein. As a result, the average particle size of the whey protein was 1.21 $\mu$m, and the whey protein solution was free from graininess and had good texture. From the result, it was confirmed that the whey protein had improved heat stability.

It is to be noted that the average particle size of the whey protein contained in the whey protein solution measured after the completion of the shear treatment was 0.89 $\mu$m.

<Example 2>

Whey protein was denatured in the same manner as in Example 1 to obtain better denatured whey protein, and then corn soup containing the better denatured whey protein was produced by blending raw materials in a blend ratio shown in Table 2. It is to be noted that the better denatured whey protein was a spray-dried product of better denatured WPC 80 (solid content: 97%) obtained by denaturing WPC 80 (manufactured by Milei GmbH in Germany under the trade name of "Milei 80") by the denaturation method according to the present invention and then by spray drying the better denatured WPC 80.

(Production Method)

First, butter was added to water (as a solvent) and heated to 50°C. Then, the spray-dried product of better denatured WPC 80 and other raw materials (i.e., powdered skimmed milk, corn puree, chicken extract, vegetable extract, salt, and glycerin fatty acid ester) were added thereto. These raw materials were dispersed and dissolved in the water containing butter by mixing them using a homomixer (manufactured by Primix Corporation) at 8,000 rpm for 3 minutes. Then, the thus obtained mixture was sterilized by heating at 110°C for 2 seconds. Then, the mixture was homogenized by a homogenizer (manufactured by Sanmaru Machinery Co., Ltd.) at 12 MPa and was then cooled to 10°C to produce corn soup.

The thus produced corn soup was free from aggregation or gelation of whey protein and therefore had good appearance and taste.

[Table 2]

| Raw Materials | Manufacturers | Blend ratio (%) |
|---|---|---|
| Spray-dried product of better denatured WPC 80 | - | 4 |
| Powdered skim milk | Morinaga Milk Industry Co., Ltd. | 2 |
| Corn puree | Shin-Shin Foods Co., Ltd. | 20 |
| Salt-free butter | Morinaga Milk Industry Co., Ltd. | 4 |
| Chicken extract | Tokai Bussan Co., Ltd. | 1.2 |

(continued)

| Raw Materials | Manufacturers | Blend ratio (%) |
|---|---|---|
| Vegetable extract | Tokai Bussan Co., Ltd. | 0.5 |
| Salt | The salt Industry Center of Japan | 0.3 |
| Glycerin fatty acid ester | San-Ei Gen F.F.I., Inc. | 0.1 |
| Water (as a solvent) | - | 67.9 |
| Total | | 100 |

<Example 3>

Whey protein was denatured in the same manner as in Example 1 to obtain better denatured whey protein, and then ice cream containing the better denatured whey protein was produced by blending raw materials in a blend ratio shown in Table 3. It is to be noted that the better denatured whey protein was a spray-dried product of better denatured WPC 35 (solid content: 97%) obtained by denaturing WPC 35 (manufactured by Milei GmbH in Germany under the trade name of "Milei 35") by the denaturation method according to the present invention and then by spray drying the better denatured WPC 35.

(Production Method)

The spray-dried product of better denatured WPC 35 (solid content: 97%) and other raw materials (i.e., sweetened condensed skim milk, salt-free butter, granulated sugar, corn syrup solid, glycerin fatty acid ester, guar gum, and carrageenan) were added to water (as a solvent) heated to 50°C, and were then dispersed and dissolved in the water by mixing them using a homomixer (manufactured by Primix Corporation) at 8,000 rpm for 2 minutes to obtain a mixture.
Then, the mixture was homogenized by a homogenizer (manufactured by Sanmaru Machinery Co., Ltd.) at 12 MPa, sterilized by heating at 85°C for 10 seconds, and cooled to 10°C to prepare an ice cream mix.
The ice cream mix was frozen using an ice cream freezer (manufactured by CARPIGIANI under the trade name of "L 12/C") to achieve an overrun of 30%. In this way, ice cream was produced.
The ice cream produced in Example 3 was free from graininess and had smooth texture and good taste.

[Table 3]

| Raw Materials | Manufacturers | Blend Ratio (%) |
|---|---|---|
| Spray-dried product of better denatured WPC 35 | - | 6 |
| Sweetened condensed skim milk | Morinaga Milk Industry Co., Ltd. | 4 |
| Salt-free butter | Morinaga Milk Industry Co., Ltd. | 10 |
| Granulated sugar | Dai-Nippon Meiji Sugar Co., Ltd. | 10 |
| Corn syrup solid | Showa Sangyo Co., Ltd. | 8 |
| Glycerin fatty acid ester | San-Ei Gen F.F.I., Inc. | 0.4 |
| Guar gum | San-Ei Gen F.F.I., Inc. | 0.04 |
| Carrageenan | San-Ei Gen F.F.I., Inc. | 0.01 |
| Water (as a solvent) | - | 61.55 |
| Total | | 100 |

Hereinbelow, the present invention will be described in detail with reference to the following test examples.

<Test Example 1>

Test Example 1 was performed to compare the results of the test for the measurement of the average particle size and the sensory evaluation test performed after the heating test between whey protein denatured by the method according to the present invention and whey protein subjected to shear treatment by a conventional method.

(1) Preparation of Samples

Better denatured whey protein (equivalent of better denatured WPC 50) prepared in the same manner as in Example 1 was used as a test sample 1.

"Simplesse 100" (manufactured by CP Kelco, whey protein content: about 50%) which is whey protein subjected to shear treatment described in the above-mentioned Patent Document 3 (Japanese Patent No. 3798249) was used as a control sample 1.

Further, whey protein treated by a method described in Japanese Patent Application Laid-Open No. 2003-535609 was used as a control sample 2. The control sample 2 was prepared in the following manner. Whey protein "Simplesse 100" (control sample 1) was dissolved in water at room temperature to prepare a 20% (by mass) solution. The solution was heat treated at 77°C for 30 minutes while being sheared using a T.K. Homomixer Mark II (manufactured by Primix Corporation) at a shearing speed of 10,000 s$^{-1}$. After the completion of heat treatment, the solution was cooled to room temperature and was then homogenized using a homogenizer (manufactured by APV) at 50 MPa (single stage) three times to prepare a control sample 2.

Further, whey protein (the equivalent of WPC 50 used in Example 1) not subjected to denaturation treatment at all was used as a negative sample 1.

It is to be noted that the whey protein content of "Simplesse 100" used for preparing the control samples 1 and 2 was the same as that of the equivalent of WPC 50, and the composition of "Simplesse 100" was substantially the same as that of the test sample 1.

(2) Test Method

The heating test (i.e., the sensory evaluation test and the test for measurement of average particle size) was performed on each of the samples.

More specifically, the sensory evaluation test was performed by 5 to 10 panelists in the following manner. First, each of the samples was dissolved to prepare a sample solution with a solid content of 12.5% by mass, and then the sample solution was heat treated at 85°C for 10 minutes. Then, the texture (e.g., graininess, dustiness, thickness) and appearance (e.g., gelation, aggregation) of the sample solution were each evaluated by assigning a score ranging from 0 (lowest score) to 3 (highest score) with increments of 1 and an average score of the panelists was calculated. When the calculated average score A was higher than 2 but 3 or lower (i.e., $2 < A \leq 3$), the result of the sensory evaluation test was defined as "good". When the calculated average score A was higher than 1 but 2 or lower (i.e., $1 < A \leq 2$), the result of the sensory evaluation test was defined as "slightly good". When the calculated average score A was 0 or higher but 1 or lower (i.e., $0 \leq A \leq 1$), the result of the sensory evaluation test was defined as "bad".

Further, the test for measurement of average particle size was performed by measuring the average particle size (i.e., particle size at 50% cumulative distribution) of whey protein particles contained in the heat-treated sample solution with the use of a laser diffraction particle size distribution analyzer (manufactured by Horiba, Ltd. under the trade name of "LA-500") under conditions where a circulation flow rate was set to level 2 and a mixing speed was set to level 2.

(3) Test Results

The results of Test Example 1, that is, the results of the test for the measurement of the average particle size and the sensory evaluation test performed on each of the samples after the heating test are shown in Table 4.

As can be seen from Table 4, the texture and appearance of the test sample 1, which is whey protein denatured by the method according to the present invention, were evaluated as "good" in the sensory evaluation test performed after the heating test (heat treatment at 85°C for 10 minutes) . Further, the average particle size of the test sample 1was 1.21 $\mu$m. From the result, it was found that the test sample 1 kept its very fine particle size having good effect on its taste and appearance even after the heating test. As a result, the heat stability of the test sample 1 was evaluated as good.

However, the average particle size of each of the control samples 1 and 2 as measured after the heating test was larger than that of the test sample 1 (control sample 1: 94.02 $\mu$m, control sample 2: 15.03 $\mu$m). Further, the control sample 1 and the control sample 2 were evaluated as bad in the sensory evaluation test, because aggregation of whey protein particles was observed and they had excessive thickness. As a result, the heat stability of both the control sample 1 and the control sample 2 was comprehensively evaluated as bad ($\times$).

It is to be noted that in the case of the negative sample 1, gelation of whey protein was caused by the heating test, and therefore the measurement of the average particle size could not be performed. Further, the result of the sensory evaluation test was also bad.

[Table 4]

| Samples | Average Particle Size ($\mu$m) | Sensory Evaluation |
|---|---|---|
| Test sample 1 | 1.21 | Good |

(continued)

| Samples | Average Particle Size ($\mu$m) | Sensory Evaluation |
|---|---|---|
| Control sample 1 | 94.02 | Bad |
| Control sample 1 | 15.03 | Bad |
| Negative sample 1 | Gelled | Bad |

(4) Consideration

The solution of the better denatured whey protein used as the test sample 1 was spray-dried using a Niro dryer (manufactured by NIRO) to obtain a spray-dried product. Then, a solution containing the spray-dried product as solid matter in an amount of 12.5% by mass was prepared, and the solution was subjected to the heating test. As a result, the average particle size of whey protein particles contained in the solution was hardly changed, and the result of the sensory evaluation test was also good. From the result, it has been confirmed that vacuum concentration or spray drying does not cause adverse effect on (or change in) the heat stability of whey protein when performed under the conditions of Test Example 1.

<Test Example 2>

Test Example 2 was performed to examine the heat stability of whey protein raw materials different in whey protein concentration subjected to the shear treatment and heat treatment described in Example 1.

(1) Preparation of Samples

Better denatured whey protein (equivalent of better denatured WPC 50) prepared in the same manner as in Example 1 was used as a test sample 1.
Better denatured whey protein prepared in the same manner as in Example 1 except that WPC 80 (whey protein content: 80% by mass) was used as a whey protein raw material was used as a test sample 2. Better denatured whey protein prepared in the same manner as in Example 1 except that WPC 35 (whey protein content: 35% by mass) was used as a whey protein raw material was used as a test sample 3.

(2) Test Method

Each of the samples was subjected to the heating test in the same manner as in Test Example 1.

(3) Test Results

The results of Test Example 2, that is, the results of the test for the measurement of the average particle size and the sensory evaluation test performed on each of the samples after the heating test are shown in Table 5.
As can be seen from the results shown in Table 5, in all the cases of the test samples 1 to 3 using the whey protein raw materials (powder) whose whey protein contents were 35, 50, and 80% by mass, the better denatured whey protein prepared by the method according to the present invention kept its very fine average particle size having good effect on its taste and appearance and the result of the sensory evaluation test was also good. From the result, it was found that the all the test samples 1 to 3 had improved (good) heat stability.

[Table 5]

| Samples | Average Particle Size($\mu$m) | Sensory Evaluation |
|---|---|---|
| Test sample 1 | 1.21 | Good |
| Test sample 2 | 1.07 | Good |
| Test sample 3 | 2.03 | Good |

<Test Example 3>

Test Example 3 was performed to examine the effect of protein concentration of a whey protein solution subjected to shear treatment and heat treatment on heat stability of whey protein.

(1) Preparation of Samples

A sample using WPC 80 (manufactured by Milei GmbH in Germany) with a high protein content as a whey protein raw material was prepared.

(2) Test Method

As samples to be subjected to shear treatment and heat treatment, whey protein solutions with a protein content of 5 to 20% by mass were prepared. Better denatured whey proteins were prepared using these whey protein solutions in the same manner as in Example 1 except that the shearing speed was set to 25, 000 s$^{-1}$, the heating temperature in the final heating step was set to 85°C, and the heating holding time in the final holding step was set to 30 seconds, and were then subjected to the heating test in the same manner as in Test Example 1.

(3) Test Results

The results of Test Example 3, that is, the results of the test for the measurement of the average particle size and the sensory evaluation test performed on each of the samples after the heating test are shown in Table 6.

As can be seen from the results shown in Table 6, in all the cases where the protein concentration of the whey protein solution was in the range of 5 to 18% by mass, the average particle size of the better denatured whey protein was not widely changed even after the heating test and the better denatured whey protein kept its very small particle size having good effect on its taste and appearance, and the taste of the better denatured whey protein was evaluated as good in the sensory evaluation test. From the results, the heat stability of the better denatured whey protein was comprehensively evaluated as good.

On the other hand, in a case where the protein concentration of the whey protein solution was 20% by mass, gelation of whey protein occurred just after the completion of denaturation process, and therefore the measurement of the average particle size could not be performed after the heating test. Further, the result of the sensory evaluation test was also bad.

[Table 6]

| Protein concentration (% by mass ) | Average Particle Size ($\mu$m) | Sensory Evaluation |
|---|---|---|
| 5 | 9.28 | Good |
| 10 | 1.23 | Good |
| 12 | 1.10 | Good |
| 14 | 1.26 | Good |
| 16 | 1.91 | Good |
| 18 | 4.02 | Good |
| 20 | -(Gelled) | Bad |

<Test Example 4>

Test Example 4 was performed to examine the effect of a shearing speed in the step of heating and shearing whey protein on the heat stability of the whey protein.

(1) Preparation of Samples

A sample using WPC 80 (manufactured by Milei GmbH in Germany) with a high protein content as a whey protein raw material was prepared.

(2) Test Method

Better denatured whey proteins were prepared in the same manner as in Example 1 except that the shearing speed was changed to a value within the range of 3,000 to 25,000 s$^{-1}$, and were then subjected to the heating test in the same manner as in Test Example 1.

(3) Test Results

The results of Test Example 4, that is, the results of the test for the measurement of the average particle size and the sensory evaluation test performed on each of the samples after the heating test are shown in Table 7.

As can be seen from the results shown in Table 7, in all the cases where the shearing speed was in the range of 5,000 to 25,000 s$^{-1}$, the average particle size of the better denatured whey protein was not widely changed even after the heating test and the better denatured whey protein kept its very fine particle size having good effect on its taste and appearance, and the taste of the better denatured whey protein was evaluated as good in the sensory evaluation test. On the other hand, in a case where the shearing speed was 3,000 s$^{-1}$, gelation of whey protein occurred just after shearing, and therefore the measurement of the average particle size could not be performed after the heating test. Further, the result of the sensory evaluation test was also bad.

From the results, it has been found that the shearing speed is preferably in the range of 5,000 to 25,000 s$^{-1}$, but is more preferably in the range of 10,000 to 25,000 s$^{-1}$ because heating can be achieved only by shear heat.

[Table 7]

| Shearing speed(s$^{-1}$) | Average Particle Size ($\mu$m) | Sensory Evaluation |
|---|---|---|
| 25,000 | 0.80 | Good |
| 15,000 | 0.79 | Good |
| 10,000 | 0.82 | Good |
| 7,500 | 0.88 | Good |
| 5,000 | 1.04 | Good |
| 3,000 | -(Gelled) | Bad |

<Test Example 5>

Test Example 5 was performed to examine the effect of heating temperature and heating holding time in the step of heating and shearing whey protein on the heat stability of the whey protein.

(1) Preparation of Samples

A sample using WPC 80 (manufactured by Milei GmbH in Germany) with a high protein content as a whey protein raw material was prepared.

(2) Test Method

Better denatured whey proteins were prepared in the same manner as in Example 1 except that the shearing speed was changed to 15,000 s$^{-1}$, the heating temperature in the final heating step was changed to 74 to 120°C, and the heating holding time was changed to 0.1 to 3,600 seconds (60 minutes), and were then subjected to the heating test in the same manner as in Test Example 1.

(3) Test Results

The results of Test Example 5, that is, the results of the test for the measurement of the average particle size and the sensory evaluation test performed on each of the samples after the heating test are shown in Table 8.

As a result, in a case where the heating temperature was set to 85°C and the heating holding time was set to 0.1 second, the average particle size of the better denatured whey protein was not widely changed even after the heating test and the taste of the better denatured whey protein was evaluated as good in the sensory evaluation test. From the results, the heat stability of the better denatured whey protein was comprehensively evaluated as good. Also in a case where the heating temperature was set to any one of 95, 110, and 120°C and the heating holding time was set to 0.1 second, the result of the heating test was good.

From the results, it has been found that, even when the heating holding time is 0.1 second, the present invention can be applied to better denaturation of whey protein as long as the heating temperature is set to 85°C or higher.

Further, also in a case where the heating temperature was set to 80°C and the heating holding time was set to 60 seconds, the average particle size and the taste of the better denatured whey protein were both evaluated as good after the heating test. However, in a case where the heating holding time was reduced to 0.1 second while the heating temperature was kept at 80°C, aggregation of whey protein was observed in the sensory evaluation test performed after the heating test. From the results, it has been found that in a case where the heating temperature is set to 80°C, the present invention can be applied to better denaturation of whey protein as long as the heating holding time is at least 60 seconds.

In a case where the heating temperature was set to 76°C and the heating holding time was set to 480 seconds, the results of both the test for the measurement of the average particle size and the sensory evaluation test performed after the heating test were good. However, in a case where the heating holding time was reduced to 420 seconds, the average particle size of the better denatured whey protein was increased after the heating test, and the result of the sensory evaluation test was also bad.

In a case where the heating temperature was set to 74°C and the heating holding time was set to 3,600 seconds (60 minutes), gelation of whey protein was caused by the heating test and the result of the sensory evaluation test was also bad.

From the results, it has been found that in the final heating step of the denaturation method according to the present invention, a whey protein solution is preferably heated to any temperature within the range of 76 to 120°C and then kept at the temperature for 8 minutes to 0.1 second. In order to efficiently treat a whey protein solution in a short period of time, the whey protein solution is preferably heated to a temperature of 85 to 120°C and then kept at the temperature for 0.1 second.

[Table 8]

| Conditions of heat treatment | | Results of heating test | |
|---|---|---|---|
| Temperature (°C) | Time (second) | Average Particle Size ($\mu$m) | Sensory Evaluation |
| 74 | 3600 | Gelled | Bad |
| 76 | 420 | 68.78 | Bad |
| 76 | 480 | 4.14 | Good |
| 80 | 0.1 | Aggregated | Bad |
| 80 | 60 | 0.97 | Good |
| 85 | 0.1 | 1.07 | Good |
| 95 | 0.1 | 0.94 | Good |
| 110 | 0.1 | 0.79 | Good |
| 120 | 0.1 | 1.41 | Good |

<Test Example 6>

Test Example 6 was performed to compare the surface profile of particles between a dry product of better denatured whey protein obtained by the denaturation method according to the present invention and a dry product of conventional whey protein.

(1) Preparation of Samples

A dry product of a better denatured whey protein solution (equivalent of denatured WPC 50) prepared in the same manner as in Example 1 was used as a test sample 1.

A powder of Simplesse 100 (manufactured by CP Kelco, whey protein content: about 50%) was used as a control sample 1.

A solution containing the whey protein powder mixture (whey protein content: about 50%) described in Example 1 as solid matter in an amount of 6% by mass was heat-treated at 85°C for 360 seconds and then homogenized using a high-pressure homogenizer (manufactured by APV) at 100 MPa to obtain a homogenate. The spray-dried homogenate was used as a control sample 2.

(2) Test Method

Each of the samples was observed with a scanning probe microscope under the following conditions.

Apparatus: SFT-3500 (manufactured by Shimadzu Corporation)
Operation mode: Dynamic mode
Cantilever: OMCL-AC240TS
Scanning range: 5 $\mu$m $\times$ 5 $\mu$m

(3) Test Results

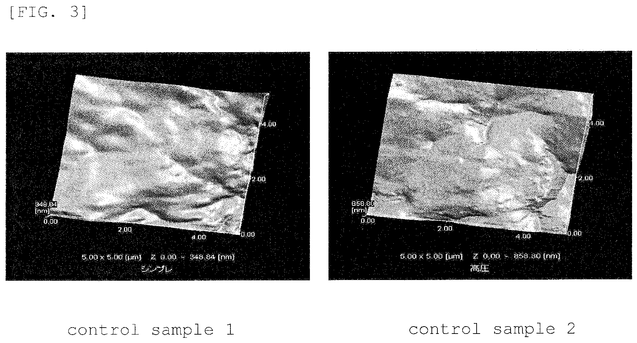

In Test Example 6, the measurement area was 5 $\mu$m $\times$ 5 $\mu$m. The image of the test sample 1 is shown in Fig. 2 and the images of the control samples 1 and 2 are shown in Fig. 3.

As can be seen from the image shown in Fig. 2, about 150 micro projections having a diameter of 200 nm or less and a height of 500 nm or less were observed on the particle surface of the test sample 1. On the other hand, as can be seen from Fig. 3, the micro projections observed in the test sample 1 were not observed in the control samples 1 and 2. From the result, it has been confirmed that the control samples 1 and 2 are different from the better denatured whey protein according to the present invention in particle surface profile.

It is supposed that the presence of the micro projections on the particle surface of the better denatured whey protein according to the present invention contributes to the properties of the better denatured whey protein such that it does not undergo aggregation, gelation, or precipitation by reheating at a temperature higher than the denaturation temperature of whey protein simulating heat sterilization in food production and keeps good texture (i.e., free from graininess, dustiness, excessive thickness) even after the reheating.

INDUSTRIAL APPLICABILITY

Better denatured whey protein obtained by the denaturation method according to the present invention has significantly improved heat stability as compared to conventional whey protein, and therefore does not undergo an increase in viscosity, gelation, or aggregation even when subjected to high-temperature sterilization or the like. Such better denatured whey protein is suitable for use as a raw material of various products, such as foods and beverages and cosmetics, whose production process involves heat treatment. The better denatured whey protein according to the present invention can be directly used in the form of solution, but if necessary, may be concentrated to obtain a concentrate. Further, the concentrate may be dried to obtain powder. Therefore, the better denatured whey protein according to the present invention can be stored for a long period of time and transported over a long distance.

**Claims**

1. A method of producing denatured whey protein, the method comprising the steps of:

   1) preparing a whey protein solution from whey protein, wherein the whey protein solution is a solution having a whey protein content of 5 to 18% by mass; and
   2A) allowing the whey protein solution to be continuously brought into contact and mixed with a whey protein solution flowing in a form of turbulent flow between two concentric cylinders while the mixed whey protein solution flowing in the form of turbulent flow between the two concentric cylinders is sheared at a shearing speed of 5,000 s$^{-1}$ to 25,000 s$^{-1}$ at a temperature in a range of 85 to 120°C for at least 0.1 second, in a range of 80 to 85°C for at least 60 seconds, or in a range of 76 to 80°C for at least 480 seconds.

2. The method according to claim 1, further comprising:

   using an apparatus including:

      a cylindrical static mixing vessel;
      a rotation axis provided in the static mixing vessel so as to be concentric with an axis of the static mixing vessel; and
      a rotary blade which has a diameter smaller than that of the static mixing vessel, which is attached to the rotation axis, and which includes a porous cylinder provided on its outer peripheral side and having a plurality of pores penetrating therethrough in a radial direction,

wherein the contact and mixing of the whey protein solution with the whey protein solution flowing in the form of turbulent flow between two concentric cylinders is performed by allowing the whey protein solution introduced into an inside of the porous cylinder to be discharged through the pores of the porous cylinder and brought into contact and mixed with the whey protein solution flowing in the form of turbulent flow in a cylindrical space between the static mixing vessel and the porous cylinder by rotating the rotary blade.

3. The method according to claim 1 or 2, further comprising:

using an apparatus including:

a cylindrical static mixing vessel;
a rotation axis provided in the static mixing vessel so as to be concentric with an axis of the static mixing vessel; and
a rotary blade which has a diameter smaller than that of the static mixing vessel, which is attached to the rotation axis, and which includes a porous cylinder provided on its outer peripheral side and having a plurality of pores penetrating therethrough in a radial direction,

wherein the shearing of the whey protein solution is performed by allowing the whey protein solution to flow in the form of turbulent flow in a cylindrical space between the static mixing vessel and the porous cylinder by rotating the rotary blade.

**Patentansprüche**

1. Verfahren zur Herstellung von denaturiertem Molkeprotein, wobei das Verfahren folgende Stufen umfasst:

1) das Herstellen einer Molkeproteinlösung aus Molkeprotein, wobei die Molkeproteinlösung eine Lösung mit einem Molkeproteingehalt von 5 bis 18 Masse-% ist; und
2A) das kontinuierliche Inkontaktbringen und Vermischen der Molkeproteinlösung mit einer Molkeproteinlösung, die in Form eines turbulenten Stroms zwischen zwei konzentrischen Zylindern strömt, während die in Form eines turbulenten Stroms zwischen den beiden konzentrischen Zylindern strömende vermischte Molkeproteinlösung geschert wird mit einer Schergeschwindigkeit von 5.000 $s^{-1}$ bis 25.000 $s^{-1}$, und zwar bei einer Temperatur im Bereich von 85 bis 120°C für mindestens 0,1 Sekunden, im Bereich von 80 bis 85°C für mindestens 60 Sekunden oder im Bereich von 76 bis 80°C für mindestens 480 Sekunden.

2. Verfahren nach Anspruch 1, des Weiteren umfassend:

das Verwenden einer Vorrichtung, umfassend:

ein zylindrisches statisches Mischgefäß;
eine Rotationsachse, die in dem statischen Mischgefäß angeordnet ist, so dass sie konzentrisch ist mit einer Achse des statischen Mischgefäßes; und
eine rotierende Schaufel, die einen Durchmesser aufweist, der kleiner ist als derjenige des statischen Mischgefäßes, welche verbunden ist mit der Rotationsachse, und die einen porösen Zylinder umfasst, der an ihrer äußeren peripheren Seite angebracht ist und eine Mehrzahl von Poren aufweist, die in der radialen Richtung durch diesen hindurchtreten,

wobei der Kontakt und das Vermischen der Molkeproteinlösung mit der Molkeproteinlösung, die in der Form eines turbulenten Stroms zwischen zwei konzentrischen Zylindern strömt, durchgeführt wird indem die Molkeproteinlösung eingeführt wird in ein Inneres des porösen Zylinders und daraus austreten gelassen wird durch die Poren des porösen Zylinders und in Kontakt gebracht und vermischt wird mit der Molkeproteinlösung, die in der Form eines turbulenten Stroms in einen zylindrischen Raum zwischen dem statischen Mischgefäß und dem porösen Zylinder strömt, und zwar durch Rotieren der rotierenden Schaufel.

3. Verfahren nach Anspruch 1 oder 2, des Weiteren umfassend:

das Verwenden einer Vorrichtung, umfassend:

ein zylindrisches statisches Mischgefäß;

eine Rotationsachse, die in dem statischen Mischgefäß so angeordnet ist, dass sie konzentrisch ist mit einer Achse des statischen Mischgefäßes; und

eine rotierende Schaufel, die einen Durchmesser aufweist, der kleiner ist als derjenige des statischen Mischgefäßes, welche verbunden ist mit der Rotationsachse, und die einen porösen Zylinder umfasst, der an ihrer äußeren peripheren Seite angebracht ist und eine Mehrzahl von Poren aufweist, die in der radialen Richtung durch diesen hindurchtreten,

wobei das Scheren der Molkeproteinlösung durchgeführt wird, indem die Molkeproteinlösung in Form eines turbulenten Stroms strömen gelassen wird in einem zylindrischen Raum zwischen dem statischen Mischgefäß und dem porösen Zylinder durch Rotieren der rotierenden Schaufel.

**Revendications**

1. Procédé de production d'une protéine dénaturée du lactosérum comprenant les étapes de :

   1) la préparation d'une solution de protéine du lactosérum à partir d'une protéine du lactosérum, dans lequel la solution de protéine du lactosérum est une solution présentant une teneur en protéine du lactosérum de 5 à 18 % en masse ; et

   2A) l'étape permettant à la solution de protéine du lactosérum d'être mise en contact et mélangée en continu avec une solution de protéine du lactosérum circulant sous une forme de flux turbulent entre deux cylindres concentriques alors que la solution de protéine du lactosérum mélangée circulant sous la forme de flux turbulent entre les deux cylindres concentriques est cisaillée à une vitesse de cisaillement de 5000 s$^{-1}$ à 25 000 s$^{-1}$ à une température dans une plage de 85 à 120 °C pendant au moins 0,1 seconde, dans une plage de 80 à 85 °C pendant au moins 60 secondes, ou dans une plage de 76 à 80 °C pendant au moins 480 secondes.

2. Procédé selon la revendication 1, comprenant en outre :

   l'utilisation d'un appareil comprenant :

   un récipient cylindrique de mélange statique ;
   un axe de rotation fourni dans le récipient de mélange statique de façon à être concentrique avec un axe du récipient de mélange statique ; et
   une lame rotative qui a un diamètre plus petit que celui du récipient de mélange statique, qui est fixée à l'axe de rotation, et qui comprend un cylindre poreux fourni sur son côté périphérique externe et comportant une pluralité de pores pénétrant à travers dans une direction radiale,

   dans lequel le contact et le mélange de la solution de protéine du lactosérum avec la solution de protéine du lactosérum circulant sous la forme de flux turbulent entre deux cylindres concentriques est effectué en permettant à la solution de protéine du lactosérum introduite à l'intérieur du cylindre poreux d'être déchargée à travers les pores du cylindre poreux et mise en contact et mélangée avec la solution de protéine du lactosérum circulant sous la forme de flux turbulent dans un espace cylindrique entre le récipient de mélange statique et le cylindre poreux par rotation de la lame rotative.

3. Procédé selon la revendication 1 ou 2, comprenant en outre :

   l'utilisation d'un appareil comprenant :

   un récipient cylindrique de mélange statique
   un axe de rotation fourni dans le récipient de mélange statique de façon à être concentrique avec un axe du récipient de mélange statique ; et
   une lame rotative qui a un diamètre plus petit que celui du récipient de mélange statique, qui est fixée à l'axe de rotation, et qui comprend un cylindre poreux fourni sur son côté périphérique externe et comportant une pluralité de pores pénétrant à travers dans une direction radiale,

   dans lequel le cisaillement de la solution de protéine du lactosérum est effectué en permettant à la solution de protéine du lactosérum de circuler sous la forme de flux turbulent dans un espace cylindrique entre le récipient de mélange statique et le cylindre poreux par rotation de la lame rotative.

[FIG. 1]

[FIG. 2]

test sample 1

[FIG. 3]

control sample 1                control sample 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6509475 A
- JP 2000004786 A
- JP 7184556 A
- JP 3798249 B
- EP 1775542 A1
- JP 2007125454 A
- JP 2003535609 A

**Non-patent literature cited in the description**

- Comprehensive Encyclopedia of Milk. Asakura Publishing Co., Ltd, 1998, 61